# EUROPEAN PATENT APPLICATION

(11) **EP 1 985 595 A2**
(43) Date of publication of application: **29.10.2008**
(21) Application number: 08154767.1
(22) Date of filing: 18.04.2008
(51) Int. Cl.: C03C 25/48, C03C 25/16, C03C 25/64

(54) **Method for functional coating of basalt fiber and of basalt fiber core twisted yarn, basalt fiber and basalt fiber core twisted yarn by using the method and fabric woven therefrom**

(30) Priority: 19.04.2007 KR 20070038218
(71) Applicant: Secotech Co., Ltd., Gyeonggi-do 445-961 (KR)
(72) Inventor: Lee, Chun Kyu, Yongin-si Gyeonggi-do 446-736 (KR)
(74) Representative: Zech, Stefan Markus

(57) **Abstract**

Disclosed herein is a method of functionally coating a basalt fiber, including: coating a basalt fiber by passing the basalt fiber through an aqueous fluorine-based solution including 50 ~ 60 wt% of polytetrafluoroethylene (PTFE), 2 ~ 5 wt% of a nonionic surfactant and water at a passing speed of 1 ~ 2 m/minute, the solution being maintained at a temperature of 20 ~ 25°C; drying the coated basalt fiber at a temperature of 80 ~ 110°C; heating the dried basalt fiber to a temperature of 180 ~ 270°C; and sintering the heated basalt fiber at a temperature of 360 ~ 420°C. Further, disclosed herein is a method of functionally coating a basalt core yarn, including: preparing a basalt core yarn by winding a sub fiber around a basalt fiber, which is a main fiber, and then twisting the sub fiber and basalt fiber; coating the basalt core yarn by passing the prepared basalt core yarn through a coating solution including 35 ~ 45 wt% of a phosphorus-based fire retardant, 50 ~ 59.9 wt% of toluene, which is a solvent, and 0.1 ~ 10 wt% of a thermostabilizer at a passing speed of 280 ~ 320 m/hour, the coating solution being maintained at a temperature of 95 ~ 105°C; and drying the coated basalt core yarn.

## Description

### BACKGROUND OF THE INVENTION

### 1. Field of the Invention

The present invention relates to methods of functionally coating a basalt fiber and a basalt core yarn, the basalt fiber and basalt core yarn fabricated using the methods, and a basalt fabric woven therefrom. More particularly, the present invention relates to a method of functionally coating a basalt fiber with a fluorine-based coating agent to impart flexibility and ease of weaving thereto and a method of functionally coating a basalt core yarn with a fire-retardant phosphorus-based coating agent to impart fire-retardant properties thereto, and to a method of applying a silicon resin on the surface of a basalt fabric woven from the basalt core yarn coated using the method to increase perforation resistance properties at the time of a fire.

### 2. Description of the Related Art

Generally, a basalt fiber, which is an environment-friendly inorganic fiber fabricated using basalt which has been weathered and then stabilized for a long time, has excellent heat resistance, alkali resistance and mechanical properties.

Korean Patent Registration No. 465272, filed by and allowed to the present applicant, discloses a method of continuously fabricating a high-quality basalt fiber, comprising: crushing basalt into basalt debris having a diameter of 20 mm or less; melting the basalt debris at a temperature of 1440 - 1480°C; drawing the molten basalt debris into basalt fiber at a temperature of 1380 - 1480°C; slowly cooling the drawn basalt fiber to a temperature of 960 ~ 1150°C; applying a surface treating agent (a sizing agent) on the cooled basalt fiber; and drying the basalt fiber coated with the surface treating agent and then winding the dried basalt fiber. Through this method, a continuous basalt fiber having excellent heat resistance, alkali resistance and mechanical properties is continuously fabricated, and particularly, a fire-retardant basalt fiber having very excellent heat resistance can be obtained.

However, since basalt fibers are easily broken by external force because they have very low shear strength and knot strength, it is not easy to produce fabric using such basalt fibers. Further, since basalt fibers are an inorganic material, basalt fibers have low surface quality when used as an interior finishing material, and it is not as easy to color basalt fibers or basalt fabric as it is to color other natural fibers or organic fibers (synthetic fibers).

In order to solve the above problems, Korean Patent Registration No. 722409, filed by and allowed to the present applicant, discloses a method and apparatus for fabricating a basalt core yarn and the basalt core yarn fabricated using the method and apparatus. The method and apparatus for fabricating a basalt core yarn comprises: unrolling a basalt fiber having a fineness of 300 - 1000 deniers; applying a sizing agent on the unrolled basalt fiber; heating the basalt fiber coated with the sizing agent to a temperature of 100 ~ 180°C; unrolling a first fire-retardant fiber and then rolling the unrolled first fire-retardant fiber around the heated basalt fiber to fabricate a basalt core yarn; and winding the fabricated basalt core yarn.

The basalt core yarn, including a basalt fiber, serving as a core (main fiber), and a fire-retardant fiber (sub fiber) covering the basalt fiber, is advantageous in that, when the fire-retardant fiber has a good tactile feel, hygroscopicity, glossiness and coloring properties, the fire-retardant fiber exhibits the general properties of fiber, thus making up for the disadvantages of the basalt fiber and enabling the basalt fiber, which is a core (main fiber), to exhibit heat resistance.

However, the basalt core yarn, disclosed in Korean Patent Registration No. 722409, is problematic in that a fire-retardant fiber must be used as a sub fiber, and in that the basalt fiber, constituting the core of the basalt core yarn, is always bent during or after a weaving process, and is thus easily broken.

### SUMMARY OF THE INVENTION

The present inventors have conducted extensive testing and research for a long time in order to solve the above problems associated with basalt fiber. As a result, they found that, when basalt fiber is coated with a fluorine-based coating agent, the flexibility, ease of weaving and colorability of the coated basalt fiber are greatly improved, and that, when a basalt core yarn or a sub yarn used therein is coated with a fire-retardant phosphorus-based coating agent, the fire-retardant properties and ease of weaving of the coated basalt core yarn are further improved. Based on these findings, the present invention was completed.

Accordingly, the present invention has been made keeping in mind the above problems occurring in the prior art, and an object of the present invention is to provide a method of functionally coating a basalt fiber with a fluorine-based coating agent to impart flexibility and ease of weaving thereto and a method of functionally coating a basalt core yarn with a fire-retardant phosphorus-based coating agent to impart fire-retardant properties thereto, the basalt fiber and basalt core yarn fabricated using the methods, and a basalt fabric woven therefrom.

In order to accomplish the above object, a first aspect of the present invention provides a method of functionally coating a basalt fiber, which is prepared using basalt, including: coating a basalt fiber by passing the basalt fiber through a fluorine-based coating solution at a passing speed of 1 - 2 m/minute, the solution being maintained at a temperature of 20 - 25°C.

Here, the coating solution, used in the method of functionally coating a basalt fiber, includes 50 - 60 wt% of polytetrafluoroethylene (PTFE), 2 - 5 wt% of a nonionic surfactant, and the balance of water.

Further, the method of functionally coating a basalt fiber may further include: before the coating the basalt fiber, heating the basalt fiber to a temperature of 380 ~ 420°C.

Preferably, the method of functionally coating a basalt fiber may further include: after the coating the basalt fiber, drying the coated basalt fiber at a temperature of 80 - 110°C; heating the dried basalt fiber to a temperature of 180 ~ 270°C; and sintering the heated basalt fiber at a temperature of 360 - 420°C.

Further, the present invention provides a basalt fiber fabricated using the method.

Further, the present invention provides a basalt fabric woven from the basalt fiber fabricated using the method.

A second aspect of the present invention provides a method of functionally coating a basalt core yarn, which is prepared by winding a sub fiber around a basalt fiber, which is a main fiber, and then twisting the sub fiber and basalt fiber, including: heating a coating solution containing a phosphorus-based fire retardant to a temperature of 95 - 105°C and then maintaining the coating solution at a constant temperature; and coating the sub fiber by passing the sub fiber through the coating solution at a passing speed of 280 ~ 320 m/hour, or preparing a basalt core yarn and then coating the basalt core yarn by passing the prepared basalt core yarn through the coating solution at a passing speed of 280 - 320 m/hour, while maintaining the coating solution at a temperature of 95 - 105°C.

Here, the coating solution used in the method of functionally coating a basalt core yarn includes 35 - 45 wt% of a phosphorus-based fire retardant, 50 ~ 59.9 wt% of toluene, which is a solvent, and 0.1 ~ 10 wt% of a thermostabilizer.

Further, the coating solution is prepared by adding the phosphorus-based retardant to the solvent to form a mixed solution, stirring the mixed solution for 5 minutes or more, adding a thermostabilizer to the mixed solution, and then further stirring the mixed solution for 3 minutes or more.

Further, the present invention provides a basalt core yarn fabricated using the method.

Further, the present invention provides a basalt fabric produced using the basalt core yarn fabricated through the method.

A third aspect of the present invention provides a basalt fabric having improved perforation resistance properties at the time of a fire, produced by applying a fire-retardant silicon resin on the surface of a fabric (hereinafter, referred to as 'a basalt fabric') woven from the basalt core yarns using them as wefts and warps.

### DESCRIPTION OF THE PREFERRED EMBODIMENTS

Hereinafter, preferred embodiments of the present invention will be described in detail.

First, a method of functionally coating a basalt fiber according to the present invention will be described in detail.

A basalt fiber used in the present invention may be a continuous fiber, and is fabricated using the technology disclosed in the above-described Korean Patent Registration No. 722409. Such a basalt fiber has excellent heat resistance, alkali resistance and mechanical properties, and particularly, has excellent heat resistance, and thus is suitably used for a fire-retardant fiber.

The basalt fiber is coated with a coating solution including a fluorine-based coating agent as a main component.

The coating solution includes 50 - 60 wt% of polytetrafluoroethylene (PTFE), 2 - 5 wt% of a nonionic surfactant, and the balance of water.

PTFE is a commonly-used fluorine-based solvent. When the amount of PTFE is below 50 wt%, the basalt fiber is not sufficiently coated because the concentration thereof is low. In contrast, when the amount thereof is above 60 wt%, the basalt fiber is nonuniformly coated because the concentration thereof is excessively high.

As the surfactant, a nonionic surfactant, for example, Triton-X100, may be used. The surfactant serves to impart flexibility to the basalt fiber. When the amount of the surfactant is below 2 wt%, sufficient flexibility cannot be imparted to the basalt fiber. In contrast, when the amount thereof is above 5 wt%, the flexibility of the basalt fiber is not improved any further.

It is known that the coating solution including a fluorine-based coating agent as a main component is suitable for use at a temperature of 20 - 25°C. The basalt fiber passes through the coating solution at a passing speed of 1 ~ 2 m/minute.

The passing speed at which a basalt fiber passes through the coating solution is set in consideration of coating completeness and productivity. When the passing speed of the basalt fiber is below 1 m/min, productivity is decreased. In contrast, when the passing speed thereof is above 2 m/min, the basalt fiber is not sufficiently coated.

When the basalt fiber is prepared, the basalt fiber may be coated thereon with a sizing agent, for example, an epoxy resin or an acrylic resin. It is preferred that this sizing agent be removed before the basalt fiber is coated with a fluorine-based coating solution, particularly if it is desired to color the basalt fiber.

The removal of the sizing agent is conducted through a process of heating the basalt fiber to a temperature of 380 ~ 420°C before the basalt fiber is coated with the coating solution of the present invention. When the heating temperature of the basalt fiber is below 380°C, the sizing agent is not sufficiently removed from the basalt fiber. In contrast, when the heating temperature thereof is above 420°C, operation costs are increased due to the rapid increase in the heating temperature.

The basalt fiber coated with the fluorine-based coating solution is dried at a temperature of 80 - 110°C, heated to a temperature of 180 - 270°C, and then sintered at a temperature of 360 - 420°C. It is preferred that the basalt fiber be dried after it is arranged using a roller or a knife such that the coating solution can be uniformly spread on the surface of the basalt fiber.

Specifically, while the basalt fiber passes through a drying zone, the temperature of which is maintained within the range of 80 - 110°C, the coating solution applied on the surface of the basalt fiber is dried.

Subsequently, while the basalt fiber sequentially passes through a baking zone, the temperature of which is maintained within the range of 180 - 270°C, and a sintering zone, the temperature of which is maintained within the range of 360 ~ 420°C, the basalt fiber is fixedly coated with the coating solution.

It is preferred that the length of the sintering zone be set to about 50% of the total length of the drying zone, baking zone and sintering zone.

In the adjustment of the basalt fiber, the coating solution is uniformly distributed on the surface of the basalt fiber by rotatably providing a pair of rollers and then passing the basal fiber therebetween, or by providing a knife such that the knife comes into contact with the surface of the basalt fiber.

Since the basalt fiber fabricated as above has excellent fire-retardant properties and flexibility, it can be easily woven. Further, since it has excellent coloring properties, it can be formed into an interior finishing material having excellent fire-retardant properties and various colors.

Subsequently, a method of functionally coating a basalt core yarn according to the present invention will be described in detail.

A basalt core yarn is fabricated by twisting a basalt fiber, which is a main fiber, and a fiber wound around the basalt fiber, which is a sub fiber. For example, the basalt core yarn can be fabricated using the technology disclosed in Korean Patent Registration No. 722409.

The sub fiber constituting the basalt core yarn contacts a coating solution including a phosphorus-based fire retardant for a predetermined time, and is thus made fire-retardant.

The coating solution includes 35 - 45 wt% of a phosphorus-based fire retardant, 50 - 59.9 wt% of toluene, which is a solvent, and 0.1 ~ 10 wt% of a thermostabilizer.

Such a phosphorus-based fire retardant, constituting the coating solution, is known to be a fire retardant having excellent fire-retardant properties and environmental safety.

In the method, when the amount of the phosphorus-based fire retardant is below 35 wt%, the basalt core yarn does not have sufficient fire-retardant properties. In contrast, when the amount thereof is above 45 wt%, the phosphorus-based fire retardant is not sufficiently dissolved in a solvent, thus deteriorating fire-retardant effects.

The solvent functions to enable the phosphorus-based fire retardant to be sufficiently dissolved such that fire-retardant properties are imparted to the surface of the weft of the basalt core yarn. When the amount of the solvent is below 50 wt%, the phosphorus-based fire retardant is not sufficiently dissolved in the solvent, thus deteriorating fire-retardant effects. In contrast, when the amount thereof is above 59.9 wt%, the concentration of the phosphorus-based fire retardant is greatly decreased, which is not desirable.

Further, the thermostabilizer is composed of 9,10-dehydro-9-oxa-10-phosphor phenanthrene-10-oxide. When the amount of the thermostabilizer is below 0.1 wt%, the thermostabilizer does not fulfill its function. In contrast, when the amount thereof is above 10 wt%, it is excessive, which is not desirable.

This coating solution may be prepared by mixing a phosphorus-based fire retardant with a solvent to form a mixed solution, stirring the mixed solution, adding a thermostabilizer to the mixed solution, and then further stirring the mixed solution.

Here, it is preferred that the solvent and phosphorus-based fire retardant be uniformly mixed with each other by stirring them for 5 minutes or more, and that the thermostabilizer then be added to the mixed solution, and that the mixed solution and thermostabilizer then be uniformly mixed with each other by further stirring them for 3 minutes or more. When the stirring time is excessively short, the mixed solution is not uniformly mixed. In contrast, when the stirring time is excessively long, productivity is decreased.

The coating solution prepared in this way may be heated to a temperature of 95 - 105°C, and the coating efficiency thereof is maximized in this temperature range.

The sub fiber passes through the coating solution at a passing speed of 280 - 320 m/hr. When the passing speed of the sub fiber is excessively low, productivity is decreased. In contrast, when the passing speed thereof is excessively high, coating is not properly conducted.

The sub fiber is wound around the basalt fiber, which is a main fiber, thus fabricating a basal core yarn.

As such, when the sub layer, constituting the basalt core yarn, is made fire-retardant, the fire-retardant function of the entire basalt core yarn is improved together with the basalt fiber, which has excellent fire-retardant properties.

In the method of functionally coating the basalt core yarn, only a sub fiber, constituting a basalt core yarn, is coated with a coating solution including a phosphorus-based fire retardant. In addition, first, a basalt core yarn is manufactured by twisting a sub fiber and a basalt fiber, which is a main fiber, and then the manufactured basalt core yarn may optionally be coated with a coating solution including a phosphorus-based fire retardant. In the case as well, the fire-retardant function of the entire basalt core yarn can also be improved.

Therefore, the basalt fabric woven from the basalt core yarn of the present invention has excellent fire-retardant properties. Further, since the coating solution applied on the surface of the sub fiber or the coating solution applied on the surface of the basalt core yarn functions to fixedly combine the sub fiber with the main fiber, the basalt core yarn is easily woven into a basalt fabric, and the woven basalt fabric has improved durability.

Meanwhile, in the present invention, the sub fiber, which is used to fabricate the basalt core yarn, may be a natural cotton fiber. The reason for this is that, since the cotton fiber, which is a natural organic material, is environment-friendly and has excellent water absorptivity, water repellency and coloring properties, the cotton fiber can make up for the disadvantages of basalt fiber, which is an inorganic fiber, and that, particularly when the cotton fiber is burnt to ashes, since the ashes remain at the locations where the cotton fiber was woven, the cotton fiber contributes largely to the realization of perforation resistance properties in the basalt fabric together with a basalt fabric coated with a fire-retardant silicon resin, described later at the time of a fire.

It is preferred that the cotton fiber, serving as a sub fiber used to fabricate a basalt core yarn of the present invention, have a thickness of 0.3 - 0.6 mm. When the thickness of the cotton fiber is above 0.6 mm, which is excessively thick, it is difficult to twist the cotton fiber and a basalt fiber. In contrast, when the thickness thereof is below 0.3 mm, which is excessively thin, the basalt fabric manufactured using the basalt core yarn cannot sufficiently exhibit perforation resistance properties at the time of a fire.

Subsequently, the present invention provides a method of coating a fire-retardant basalt fabric, which is manufactured using the fire-retardant basalt core yarn which has been subjected to the above coating process, coated with a fire-retardant silicon resin in order to increase the fire-retardant properties thereof. The fire-retardant silicon resin is a silicon resin including a fire retardant, preferably a non-halogen fire retardant. FR-319 or FR-319A, manufactured by Jinbo Corp., may be used as the fire-retardant silicon resin. In the method, the fire-retardant silicon resin is supplied through a hopper to one side of the basalt fabric unrolled from a roller. In order to adjust the thickness of the fire-retardant silicon resin applied on one side of the basalt fabric and to uniformly apply the fire-retardant silicon resin thereon, it is preferred that the fire-retardant silicon resin be applied on the basalt fabric by being spread using a knife. In this case, it is preferred that the applied fire-retardant silicon resin have a thickness of 0.01 - 0.1 mm. When the thickness of the applied fire-retardant silicon resin is below 0.01 mm, perforation resistance properties are decreased because a small amount of fire-retardant silicon resin is applied. In contrast, when the thickness thereof is above 0.1 mm, the flexibility of the basalt fabric is decreased and the fire-retardant properties thereof are not increased further, which is noneconomical.

When the above basalt fabric, including a basalt fiber (main fiber) having a thickness of 0.6 mm, a cotton fiber (sub fiber), having a thickness of 0.55 mm, coated thereon with a phosphorus-based fire retardant and a fire-retardant silicon resin layer having a thickness of 0.05, was used as an interior finishing material (wallpaper), Korea Fire Equipment Inspection Corporation tested whether or not this interior finishing material meets the requirements as a fire-retardant material, and the results thereof are given in Table 1.

**[Table 1]**

| Test items | | Results | | | |
|---|---|---|---|---|---|
| Items | Conditions | Test results | | | Decision |
| | | 1 | 2 | 3 | |
| Heat emission test | The total heat emission amount is 8MJ/m² or less | 5.78 | 6.23 | 6.76 | Pass |
| | The maximum heat emission rate exceeds 200kw/m² within 10 seconds | 0.0 sec | 0.0 sec | 0.0 sec | Pass |
| | Test samples do not have cracks and holes and is not melted | Normal | Normal | Normal | Pass |
| Gas noxiousness test | The period of suspension of action of a testing mouse is 9 minutes or more | 13 min 02 sec | 14 min 08 sec | - | Pass |

In the test results given in Table 1, the most important physical property is the fact that test samples must not be cracked, perforated and melted. If test samples are cracked, perforated and melted, the heat emission amount and heat emission rate is rapidly increased, and noxious gas flow is also rapidly increased. The product, which is completed by coating a basalt fabric with a fire-retardant silicon resin, has higher fire-retardant properties than interior finishing materials, such as wallpaper, because its core fiber (main fiber) is a basalt fiber, which is an inorganic material, and its sub fiber, wound around the core fiber, is a natural organic fiber, namely, a cotton fiber, and thus their ashes remain when they are burnt, and because the heat resistance of the product is improved by the fire-retardant silicon resin layer formed on the basalt fabric.

As described above, according to the methods of functionally coating a basalt fiber and a basalt core yarn, the basalt fiber and basalt core yarn fabricated using the methods, and a basalt fabric woven therefrom in accordance with the present invention, there are advantages in that a basalt fiber has flexibility and is easy to weave because it is coated with a fluorine-based coating agent, and a basalt core yarn has improved functionality and quality because it is coated with a fire-retardant phosphorus-based coating agent, so that the functionally coated basalt fiber and basalt core yarn is flexible and is easily woven and colored, with the result that interior finishing materials, produced by forming a fire-retardant silicon resin layer on the surface of the basalt fabric woven from the basalt core yarn, have perforation resistance properties at the time of a fire.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of functionally coating a basalt fiber, comprising:
coating a basalt fiber by passing the basalt fiber through an aqueous fluorine-based solution including 50 - 60 wt% of polytetrafluoroethylene (PTFE), 2 - 5 wt% of a nonionic surfactant and a balance of water at a passing speed of 1 - 2 m/minute, the solution being maintained at a temperature of 20 - 25°C;
drying the coated basalt fiber at a temperature of 80 ~ 110°C;
heating the dried basalt fiber to a temperature of 180 ~ 270°C; and
sintering the heated basalt fiber at a temperature of 360
- 420°C.

2. The method of functionally coating a basalt fiber according to claim 1, further comprising: before the coating the basalt fiber, heating the basalt fiber to a temperature of 380 - 420°C.

3. A basalt fiber fabricated using the method of claim 2.

4. A method of functionally coating a basalt core yarn, comprising:
coating a sub fiber by passing the sub fiber through a coating solution including 35 - 45 wt% of a phosphorus-based fire retardant, 50 - 59.9 wt% of toluene, which is a solvent, and 0.1 ~ 10 wt% of a thermostabilizer at a passing speed of 280 - 320 m/hour, the coating solution being maintained at a temperature of 95 - 105°C;
drying the coated sub fiber; and
winding the dried sub fiber around a basalt fiber and then twisting the sub fiber and basalt fiber.

5. A method of functionally coating a basalt core yarn, comprising:
preparing a basalt core yarn by winding a sub fiber around a basalt fiber, which is a main fiber, and then twisting the sub fiber and basalt fiber;
coating the basalt core yarn by passing the prepared basalt core yarn through a coating solution including 35 - 45 wt% of a phosphorus-based fire retardant, 50 - 59.9 wt% of toluene, which is a solvent, and 0.1 ~ 10 wt% of a thermostabilizer at a passing speed of 280 - 320 m/hour, the coating solution being maintained at a temperature of 95 ~ 105°C; and
drying the coated basalt core yarn.

6. A basalt core yarn fabricated using the method of claim 4 or 5.

7. A method of fabricating a basalt fabric coated with a fire-retardant silicon resin, comprising:
coating a sub fiber by passing the sub fiber through a coating solution including 35 - 45 wt% of a phosphorus-based fire retardant, 50 - 59.9 wt% of toluene, which is a solvent, and 0.1 ~ 10 wt% of a thermostabilizer at a passing speed of 280 - 320 m/hour, the coating solution being maintained at a temperature of 95 - 105°C;
drying the coated sub fiber;
preparing a basalt core yarn by winding the dried sub fiber around a basalt fiber and then twisting the sub fiber and basalt fiber;
weaving the prepared basalt core yarns using them as wefts and warps to fabricate a basalt fabric; and
coating the fabricated basalt fabric with a fire-retardant silicon resin, in which a non-halogen fire retardant is mixed with a silicon resin, and then drying the coated basalt fabric.

8. A method of fabricating a basalt fabric coated with a fire-retardant silicon resin, comprising:
preparing a basalt core yarn by winding a sub fiber around a basalt fiber, which is a main fiber, and then twisting the sub fiber and basalt fiber;
coating the basalt core yarn by passing the prepared basalt core yarn through a coating solution including 35 - 45 wt% of a phosphorus-based fire retardant, 50 - 59.9 wt% of toluene, which is a solvent, and 0.1 ~ 10 wt% of a thermostabilizer at a passing speed of 280 - 320 m/hour, the coating solution being maintained at a temperature of 95 ~ 105°C;
drying the coated basalt core yarn;
weaving the dried basalt core yarns using them as wefts and warps to fabricate a basalt fabric; and
coating the fabricated basalt fabric with a fire-retardant silicon resin in which a non-halogen fire retardant is mixed with a silicon resin and then drying the coated basalt fabric.

9. The method of fabricating a basalt fabric coated with a fire-retardant silicon resin according to claim 7 or 8, wherein the sub fiber is a cotton fiber.

10. A basalt fabric coated with a fire-retardant silicon resin fabricated using the method of claim 9.
